Europäisches Patentamt

European Patent Office

Office européen des brevets

(11) Publication number: **0 405 379 A1**

# EUROPEAN PATENT APPLICATION

(21) Application number: 90111977.6

(22) Date of filing: 25.06.90

(51) Int. Cl.⁵: **B60H 1/34, F24F 13/065**

(30) Priority: 29.06.89 IT 6753489

(43) Date of publication of application:
02.01.91 Bulletin 91/01

(84) Designated Contracting States:
DE ES FR GB

(71) Applicant: FOGGINI PROGETTI S.r.l.
Via Aosta, 17
I-10092 Beinasco Torino(IT)

(72) Inventor: Davico, Claudio
Via Lamarmora 82

I-10095 Grugliasco (Torino)(IT)
Inventor: Giorgini, Gerardo
Strada Cigala 32/2
I-10024 Moncalieri (Torino)(IT)
Inventor: Vercesi, Piercarlo
Piazza Botta 3
I-27100 Pavia(IT)

(74) Representative: Modiano, Guido et al
MODIANO, JOSIF, PISANTY & STAUB
Modiano & Associati Via Meravigli, 16 16 16
I-20123 Milano(IT)

(54) Improved orientatable diffuser particularly for motor vehicle air-conditioning systems.

(57) The diffuser comprises a modular mechanical unit (11) composed of a manifold housing (13) which includes an orientatable distributor (15) and a throttle valve (14). The orientatable distributor (15) is constituted by a section of tube with a terminal expansion (15a) with a spherical profile which is accommodated oscillably in a corresponding spherical seat (16) of the manifold which is closed by a fixed front grille (12). Actuation means (20-23) are provided to produce the oscillation of the distributor (15) in at least two mutually orthogonal planes.

FIG.1

EP 0 405 379 A1

# IMPROVED ORIENTATABLE DIFFUSER PARTICULARLY FOR MOTOR VEHICLE AIR-CONDITIONING SYSTEMS

The present invent ion relates to an improved orientatable diffuser particularly for motor vehicle air-conditioning and ventilation systems.

As known, the diffusers for air-conditioning and ventilation systems which are currently in use comprise a fixed housing which can be connected to the air feed duct and an orientatable grille which is in turn composed of a frame and at least one set of vanes which can be orientated with respect to the frame. In this manner, by moving the grille with respect to the housing and the vanes with respect to the frame of the grille, the flow of air is orientated within a solid angle the value whereof is substantially equivalent to the value of the respective orientation angles of the grille and of the vanes.

Said known diffuser structure has numerous disadvantages, and most of all:
-- considerable structural complexity, with consequent high production costs and susceptibility to breakage and jamming,
-- difficulty in motorizing the diffuser in order to centralize the adjustment control,
-- lack of flexibility in design which forces the production of diffusers with different shapes according to the different types of motor vehicle or which vice versa limits and conditions the design and styling of the dashboard or of the other supporting elements of the diffuser if said diffuser is standardized.

Furthermore, the presence of the grille with vanes on one hand limits, for equal overall dimensions, the useful cross section for air delivery, and on the other hand introduces significant load losses which reduce the useful flow-rate.

The aim of the present invention is to eliminate these disadvantages, and within the scope of this general aim said invention has the following particular objects: to significantly simplify the diffuser structure, in particular in order to reduce its cost and facilitate its motorization, to improve the diffuser efficiency, allow wide flexibility in design by virtue of a modular configuration of the mechanical part which can be integrated with grilles, or screens, of any extension, shape, color and material.

In order to achieve this aim, these important objects and others which will become apparent from the following detailed description, the present invention relates to an improved diffuser the essential characteristic whereof resides in the fact that it comprises a modular mechanical unit which is composed of a manifold housing which includes an orientatable distributor and a throttle valve, and in that the orientatable distributor is constituted by a section of tube with a terminal expansion with a spherical profile which is accommodated oscillably in a corresponding spherical seat of the manifold housing which is closed by a fixed front grille, actuation means being provided to produce the oscillation of the orientatable distributor in at least two mutually orthogonal planes.

Preferably, according to the invention, said actuation means comprise a first reversible motor; an L-shaped bracket is keyed on the shaft of said first motor and is provided with a second reversible motor; the shaft of the second motor, which is orthogonal to the shaft of the first motor, passes in a longitudinal slot of the manifold housing and is rigidly coupled to the spherical terminal expansion of the distributor so that the rotation of the shaft of the first motor, by virtue of the oscillation of the bracket, produces a corresponding oscillation of the distributor in a first plane which passes through said slot, and the rotation of the second motor produces an oscillation of the distributor in a corresponding second plane which is orthogonal to the first one.

Further characteristics, purposes and advantages will become apparent from the following detailed description and with reference to the accompanying drawings, which are given by way of non-limitative example and wherein:

figure 1 is a longitudinal sectional view of the improved orientatable diffuser according to the present invention;

figure 2 is a front perspective view of said diffuser.

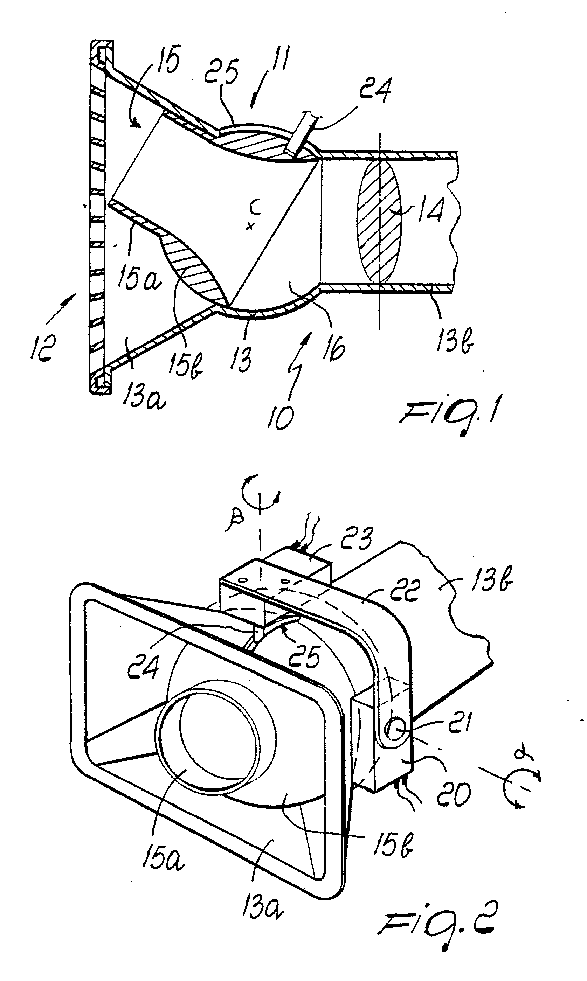

In the drawings, the reference numeral 10 generally indicates the diffuser assembly, which substantially comprises a modular mechanical unit 11 and a removable front grille 12.

The modular unit 11 can be used for any type of system and motor vehicle, whereas the grille 12 can have any configuration, whether planar or curved, and any extension in relation to the styling and design requirements of the dashboard or, more generally, of the interior fittings of the motor vehicle.

The modular unit 11 is essentially composed of a manifold housing 13 with a divergent portion 13a and a coupling 13b which can be connected to the air delivery duct. The coupling 13b comprises a throttle valve 14, and an orientatable distributor 15, constituted by a section of tube 15a provided with a terminal expansion 15b with a spherical profile, is provided inside the divergent portion of the manifold downstream of said valve.

As is clearly illustrated in the figure, the expansion 15b of the distributor is accommodated so as to be able to oscillate in a corresponding spherical seat 16 of the manifold housing 13 and can thus oscillate within a solid angle the value whereof depends on the angle of the divergent portion 13a of the manifold.

Electric motor means which can be activated by means of a centralized control are preferably provided in order to produce the oscillation of the distributor 15. Said means comprise a first reversible motor 20 which is located externally and to the side of the housing 13 with which it is rigidly associated. An L-shaped oscillating bracket 22 is keyed on the shaft 21 of the motor 20 and a second reversible motor 23 is rigidly associated with the free end of said bracket. The shaft 24 of the motor 23 is orthogonal to the shaft 21 of the motor 20 and passes in a slot 25 defined on the housing 13 so as to rigidly couple to the spherical expansion 15b of the distributor: the axis of the shaft 24 passes through the center C of the spherical seat 16 and of the expansion 15b.

It can be easily understood that an oscillation $\alpha$ of the bracket corresponds to the rotation of the shaft 21 of the first motor; by means of the shaft 24 of the second motor 23, said oscillation moves the distributor 15, causing the corresponding oscillation thereof in a first plane which passes through the slot 25.

Similarly, the rotation of the shaft 24 produces a corresponding oscillation $\beta$ of the distributor in a second plane which is orthogonal to the first.

Though the described motorized actuation is advantageous, it is evident that the same oscillations $\alpha$ and $\beta$ of the distributor can be produced manually, for example by means of lever systems or of flexible-cable transmissions capable of producing the oscillation of the bracket 22 with respect to the housing 13 and the rotation of a pivot, equivalent to the shaft 24, with respect to said bracket.

Though the concept of the invention is invariant, the details of execution and the embodiments may naturally furthermore be extensively varied with respect to what is described and illustrated by way of non-limitative example without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Improved orientatable diffuser, particularly for motor vehicle air-conditioning systems, characterized in that it comprises a mechanical modular unit which is composed of a manifold housing which includes an orientatable distributor and a throttle valve, and in that the orientatable distributor is constituted by a section of tube with a terminal expansion with a spherical profile accommodated oscillably in a corresponding spherical seat of the manifold which is closed by a fixed front grille, actuation means being provided to produce the oscillation of the orientatable distributor in at least two mutually orthogonal planes.

2. Diffuser according to claim 1, characterized in that the manifold housing comprises a coupling for connecting the air delivery duct and a divergent portion which contains the orientatable distributor and is frontally closed by said fixed grille.

3. Diffuser according to claims 1 and 2, characterized in that the distributor actuation means comprise a first reversible motor, a bracket being keyed on the shaft of said motor, said bracket having a second reversible motor; the shaft of said second motor, which is orthogonal to the shaft of said first motor, passing in a longitudinal housing of the manifold housing and being rigidly coupled to the spherical expansion of the distributor so that the rotation of the shaft of said first motor, by virtue of the oscillation of the bracket, causes a corresponding rotation of the distributor in a first plane which passes through said slot and the rotation of the shaft of the second motor produces an oscillation of the distributor in a second plane which is orthogonal to the first one.

4. Diffuser according to the preceding claim, characterized in that the rotation of the first shaft which supports the bracket and the rotation of the second shaft which is supported by said bracket are produced with the interposition of manual actuation lever systems.

Fig.1

Fig.2

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 103 155 (BOYLAN et al.)<br>* Column 2, lines 30-41; claim; figure 2 *<br>--- | 1,2 | B 60 H 1/34<br>F 24 F 13/065 |
| Y | US-A-3 832 939 (KAKEI et al.)<br>* Claim 1; column 10, lines 15-64; figures 16,18,19 * | 1,2 | |
| A | | 3,4 | |
| A | US-A-3 690 244 (A. KALLEL)<br>* Abstract; figure 2 *<br>--- | 1-3 | |
| A | DE-A-1 555 099 (DAIMLER-BENZ)<br>* Claim 1; figures 1-2 *<br>--- | 1,2,4 | |
| A | DE-A-3 333 878 (IVECO MAGIRUS)<br>* Claim 1; page 12, lines 11-15; figures 1-3 *<br>----- | 1,2 | |
| | | | TECHNICAL FIELDS SEARCHED (Int. Cl.5)<br><br>B 60 H<br>F 24 F |

The present search report has been drawn up for all claims

| Place of search | Date of completion of the search | Examiner |
|---|---|---|
| THE HAGUE | 19-09-1990 | RIVERO C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)